# EUROPEAN PATENT APPLICATION

(11) **EP 4 787 412 A1**
(43) Date of publication of application: **05.08.2026**
(21) Application number: 24878325.0
(22) Date of filing: 03.01.2024
(51) Int. Cl.: H01H 13/14, E05B 85/08

(54) **PRESSING SWITCH, VEHICLE DOOR, AND VEHICLE**

(30) Priority: 20.10.2023 CN 202311375701
(71) Applicant: Yinwang Intelligent Technologies Co., Ltd., Shenzhen, Guangdong 518110 (CN)
(72) Inventor: ZHANG, Jing, Shenzhen, Guangdong 518129 (CN); WANG, Hongji, Shenzhen, Guangdong 518129 (CN); HUA, Peng, Shenzhen, Guangdong 518129 (CN); XIA, Dongchao, Shenzhen, Guangdong 518129 (CN)
(74) Representative: Gill Jennings & Every LLP
(86) International application number: PCT/CN2024/070462
(87) International publication number: WO 2025/081668

(57) **Abstract**

The present disclosure provides a press switch, a vehicle door, and a vehicle, and pertains to the field of switch technologies. The press switch includes a base, a sliding block, and an electronic switch. A first end of the sliding block extends into the base, and the sliding block can slide relative to the base. The electronic switch is located at a second end of the sliding block, and positions of the first end and the second end of the sliding block are opposite to each other. The sliding block is configured to connect to a locking member, and the electronic switch is configured to electrically connect to a controller that controls the locking member. The press switch has an electronic switch function and a mechanical switch function, ensuring both intelligence and safety. A touch-press position and a press position of the press switch are the same, which simplifies a component layout of the press switch, helps reduce costs of the press switch, simplifies an operation of the press switch, and helps improve safety in an emergency. When the press switch performs the electronic switch function, the sliding block does not slide, thereby improving user experience.

## Description

This application claims priority to Chinese Patent Application No. 202311375701.9, filed on October 20, 2023 and entitled "PRESS SWITCH, VEHICLE DOOR, AND VEHICLE", which is incorporated herein by reference in its entirety.

### TECHNICAL FIELD

The present disclosure relates to the field of switch technologies, and in particular, to a press switch, a vehicle door, and a vehicle.

### BACKGROUND

In the switch field, a press switch is a common switch, for example, may be used on a vehicle door of a vehicle, to unlock a vehicle door lock.

Currently, most press switches used on vehicle doors are electronic switches. When a user touches/presses the press switch, the press switch sends a trigger signal to a controller, and the controller then controls the vehicle door lock to unlock.

However, in a special case, such as a vehicle line fault or a power outage, the vehicle door lock cannot be unlocked. Therefore, such a press switch has potential safety hazards.

### SUMMARY

The present disclosure provides a press switch, a vehicle door, and a vehicle. The press switch has an electronic switch function and a mechanical switch function, thereby ensuring both intelligence and safety of the press switch. A touch-press position at which the press switch performs the electronic switch function and the press position at which the electronic switch performs the mechanical switch function are the same. This simplifies a component layout of the press switch, which helps reduce costs of the press switch. Moreover, an operation of the press switch is simplified, which helps improve safety in an emergency. When the press switch performs the electronic switch function, a sliding block used to perform the mechanical switch function does not slide, thereby improving user experience.

According to a first aspect, the present disclosure provides a press switch. The press switch includes a base, a sliding block, and an electronic switch. A first end of the sliding block extends into the base, and the sliding block can slide relative to the base. The electronic switch is located at a second end of the sliding block, and positions of the first end and the second end of the sliding block are opposite to each other. The sliding block is configured to connect to a locking member, and the electronic switch is configured to electrically connect to a controller that controls the locking member.

In the solutions shown in the present disclosure, the press switch includes the electronic switch and the sliding block. The electronic switch is electrically connected to the controller that controls the locking member, and the sliding block is connected to the locking member, so that the press switch has both a mechanical switch function and an electronic switch function, thereby ensuring both intelligence and safety of the press switch.

In the solutions shown in the present disclosure, the electronic switch is located at one end of the sliding block, so that a touch-press position at which the press switch performs the electronic switch function and the press position at which the electronic switch performs the mechanical switch function are the same. This arrangement simplifies a component layout of the press switch, which helps reduce costs of the press switch. Moreover, an operation of the press switch is simplified, which helps improve safety in an emergency. This is because in an emergency in which the electronic switch function fails, an instinctive and intuitive operation of a user is to press a button with a larger force. Therefore, the user is less likely to press a wrong position in an emergency, further improving safety of the press switch.

In a possible implementation, the base is provided with an assembly opening and a first sliding groove, and the assembly opening communicates with the first sliding groove. The first end of the sliding block extends into the first sliding groove through the assembly opening.

In the solutions shown in the present disclosure, the base is provided with the assembly opening, so that the first end of the sliding block extends into the base; and the base is provided with the first sliding groove, so that the sliding block slides in the first sliding groove. The sliding block is never detached from the first sliding groove while sliding in the base. To be specific, the first end of the sliding block is always located in the first sliding groove while the sliding block slides in the base, so that the first sliding groove has a circumferential limiting function for the sliding block. This can prevent the sliding block from being stuck during reset, and prevent the sliding block from shaking in the base.

In the solutions shown in the present disclosure, the sliding block is located in the first sliding groove, and is in contact with the first sliding groove. There is static friction between the sliding block and the first sliding groove. In this case, a driving force for sliding the sliding block needs to overcome the static friction between the sliding block and the first sliding groove. Therefore, when the user touches the button or touches/presses the button with a small force, the press switch performs only the electronic switch function, and the sliding block used to perform the mechanical switch function does not slide, which can improve user experience.

In a possible implementation, the press switch further includes a first elastic member. The first elastic member is located in the first sliding groove and abuts against an end surface of the first end of the sliding block. An expansion/contraction direction of the first elastic member is consistent with a sliding direction of the sliding block.

In the solutions shown in the present disclosure, the first elastic member is provided between and abuts against the sliding block and a groove bottom of the first sliding groove, so that the pressed sliding block can be reset. In other words, the first elastic member facilitates reset of the sliding block.

In a possible implementation, the press switch further includes a second elastic member, and the second elastic member is provided between and abuts against the base and at least one side portion of the sliding block.

In the solutions shown in the present disclosure, the second elastic member is provided between and abuts against the base and the side portion of the sliding block. When the button is pressed, the second elastic member can prevent the sliding block from sliding in the base. Therefore, when the user touches the button or touches/presses the button with a small force, the press switch performs only the electronic switch function, and the sliding block used to perform the mechanical switch function does not slide, which can further improve user experience.

In the solutions shown in the present disclosure, the second elastic member allows the side portion of the sliding block to be closely attached to a groove wall of the first sliding groove, thereby increasing static friction between an outer surface of the side portion of the sliding block and an inner surface of the groove wall of the first sliding groove.

In a possible implementation, a side surface that is of the side portion of the sliding block and that abuts against the second elastic member has an inclined surface. The inclined surface is configured to gradually compress the second elastic member in a process of pressing the sliding block.

In the solutions shown in the present disclosure, when the second elastic member is compressed, an acting force perpendicular to the inclined surface is applied to the sliding block, and the acting force has a component force opposite to the sliding direction of the sliding block, thereby preventing the sliding block from being pressed or from sliding.

In a possible implementation, the inclined surface includes a first inclined surface and a second inclined surface that are connected. A junction between the first inclined surface and the second inclined surface is a recess of the side surface on which the first inclined surface and the second inclined surface are located.

When the sliding block is not pressed, the second elastic member abuts against the junction between the first inclined surface and the second inclined surface.

In the solutions shown in the present disclosure, when the sliding block is not pressed, that is, when the sliding block does not slide, the second elastic member abuts against the recess, to implement clamping between the second elastic member and the sliding block. For example, a contact block of the second elastic member is clamped with the sliding block, to enhance stability of the sliding block.

In the solutions shown in the present disclosure, the contact block is located at the recess formed by the first inclined surface and the second inclined surface, which also helps increase a force of performing the mechanical switch function. When the user touches the button or touches/presses the button with a small force, the press switch performs only the electronic switch function, and the sliding block used to perform the mechanical switch function does not slide, thereby further improving user experience.

In a possible implementation, a side surface that is of the base and that abuts against the second elastic member is provided with a second groove, and an end part of the second elastic member is engaged in the second groove.

In the solutions shown in the present disclosure, when the sliding block is not pressed, the second elastic member in the sliding block is clamped with the base, so that sliding damping of the sliding block can be increased. A force of pressing the button by the user needs to enable the contact block of the second elastic member to be detached from the second groove, so that the sliding block can slide downward. Therefore, when the user presses the button with a small force, the sliding block does not slide, and only a touch-press part of the electronic switch is touched/pressed. In this way, a pressing force that triggers the electronic switch function can be decoupled from a pressing force that triggers the mechanical switch function. The user triggers only the electronic switch function normally, and the sliding block that triggers the mechanical switch function does not move, thereby improving user experience.

In a possible implementation, the side surface that is of the base and that abuts against the second elastic member has an inclined surface. The inclined surface is configured to make the second elastic member gradually extend in a process of pressing the sliding block.

In the solutions shown in the present disclosure, when the user triggers the mechanical switch function, a large force is applied only when the contact block is triggered to be detached from the second groove. Once the contact block is detached from the second groove, the sliding block slides. Then, the contact block abuts against a third inclined surface. A spring gradually extends as the sliding block continues to slide. In this case, sliding friction between the contact block and the third inclined surface is reduced, and the sliding damping of the sliding block is reduced, so that a pressing force required by the sliding block is also reduced, and the user does not need to continue to press the button with a large force, thereby improving pressing experience of the user.

In a possible implementation, the electronic switch is a pressure switch A pressing force required to trigger the electronic switch is less than a resistance applied to the sliding block during sliding under pressing.

In the solutions shown in the present disclosure, when the user touches the button or touches/presses the button with a small force, the press switch performs only the electronic switch function, and the sliding block used to perform the mechanical switch function does not slide, thereby improving user experience.

In a possible implementation, the electronic switch is the pressure switch, and a pressing direction of the electronic switch is consistent with the sliding direction of the sliding block.

In the solutions shown in the present disclosure, in a solution in which the electronic switch is the pressure switch, the pressing direction of the electronic switch is consistent with the sliding direction of the sliding block, and both the electronic switch and the sliding block are pressed by using the button. Therefore, a touch-press position at which the press switch performs the electronic switch function and the press position at which the electronic switch performs the mechanical switch function are the same, and are a position at which the button is located. This arrangement simplifies a component layout of the press switch, which helps reduce costs of the press switch. Moreover, an operation of the press switch is simplified, which helps improve safety in an emergency. This is because in an emergency in which the electronic switch function fails, an instinctive and intuitive operation of the user is to press the button with a larger force. Therefore, the user is less likely to press a wrong position in an emergency, further improving safety of the press switch.

In a possible implementation, the press switch further includes a transmission assembly. The sliding block is connected to the transmission assembly, and the transmission assembly is configured to connect to the locking member.

In the solutions shown in the present disclosure, during application of the press switch, if the sliding direction of the sliding block is consistent with a moving direction of the connector of the locking member, for example, parallel or in a straight line, the sliding block may be directly connected to the connector of the locking member, and directly drive the connector to move. If the sliding direction of the sliding block is inconsistent with the moving direction of the connector of the locking member, for example, the sliding direction of the sliding block intersects, such as vertically intersects the moving direction of the connector, the moving direction may be changed by using the transmission assembly, so that the press switch provides, for the outside, a moving direction consistent with the moving direction of the connector.

In a possible implementation, a side wall of the base is provided with a first elongated hole, and an elongation direction of the first elongated hole is consistent with a moving direction for driving the locking member to lock or unlock.

The transmission assembly includes a first sliding pillar and a transmission member, the first sliding pillar is slidably located in the first elongated hole and is configured to connect to the locking member, and the transmission member is separately connected to the sliding block and the first sliding pillar.

In the solutions shown in the present disclosure, the press switch can associate the sliding direction of the sliding block with a moving direction of the first sliding pillar by using the transmission member, and the moving direction of the first sliding pillar is the same as the moving direction of the connector, so that the sliding block can drive the connector to move during sliding, thereby performing the mechanical switch function.

In a possible implementation, the side wall of the base is further provided with a second elongated hole, and an elongation direction of the second elongated hole is consistent with the sliding direction of the sliding block.

The sliding block is provided with a second sliding pillar, and an end part of the second sliding pillar extends out of the second elongated hole and is connected to the transmission member.

In the solutions shown in the present disclosure, the transmission member is connected to the sliding block, the sliding block is located inside the base, and the transmission member is located outside the base. Therefore, the second elongated hole is provided in the base, so that the second sliding pillar of the sliding block extends out of the base through the second elongated hole and is connected to the transmission member. In this way, the sliding block drives the transmission member to move during sliding, the transmission member is connected to the first sliding pillar to further drive the first sliding pillar to move, and the first sliding pillar is connected to the connector of the locking member to drive the connector of the locking member to move, thereby performing the mechanical switch function.

In a possible implementation, the transmission member is one of a lever, a cable, or a connecting rod.

In a possible implementation, a straight line on which the first elongated hole is located intersects a straight line on which the second elongated hole is located.

The transmission member is a lever, and includes a first rod portion and a second rod portion that intersect with each other. An intersection of the first rod portion and the second rod portion is rotatably connected to the side wall of the base.

The first rod portion is provided with a first elongated rotary hole along a length direction of the first rod portion, and the second rod portion is provided with a second elongated rotary hole along a length direction of the second rod portion.

The first sliding pillar is located in the first elongated rotary hole, and the second sliding pillar is located in the second elongated rotary hole.

In the solutions shown in the present disclosure, in a solution in which the transmission member is the lever, a pivot position of the transmission member is disposed, so that a short pressing stroke by the user leads to a long stroke of the connector of the locking member.

In a possible implementation, the transmission member includes a gear and a cable, and the sliding block is provided with a rack.

The gear is rotatably mounted on the base, and is engaged with the rack. The cable is wound around the gear, and one end of the cable is fastened to the first sliding pillar.

In a possible implementation, the transmission member includes a first gear and a second gear, the sliding block is provided with the rack, and the first sliding pillar is provided with a first rack.

Both the first gear and the second gear are rotatably mounted on the base, and the first gear is engaged with the rack of the sliding block. The second gear is engaged with the first rack of the first sliding pillar, and the first gear is engaged with the second gear.

In the solutions shown in the present disclosure, during sliding of the sliding block, because the rack of the sliding block is engaged with the first gear, the first gear rotates to drive the second gear to rotate, and the second gear is engaged with the first rack of the first sliding pillar, to drive the first sliding pillar to slide.

In a possible implementation, the press switch further includes the button. One part of the button covers the touch-press part of the electronic switch, and another part of the button covers the sliding block. A minimum spacing between the part that is of the button and that covers the sliding block and the sliding block is less than or equal to a maximum pressing stroke of the touch-press part of the electronic switch.

In the solutions shown in the present disclosure, when the user presses the button with a small force, the button slides relative to the sliding block. A maximum sliding stroke of the button relative to the sliding block is the minimum spacing d between the sliding block and the part that is of the button and that covers the sliding block. When sliding relative to the sliding block, the button touches/presses the touch-press part of the electronic switch, to trigger the electronic switch function of the electronic switch.

When the user presses the button with a large force, after a sliding stroke of the button relative to the sliding block reaches the maximum sliding stroke, the part that is of the button and that covers the sliding block abuts against the sliding block. In this case, an acting force applied by the button downward is distributed to the sliding block, instead of being completely applied to the electronic switch. Then, regardless of how much force is applied by the user, a pressing stroke of the touch-press part of the electronic switch is equal to the minimum spacing d between the part that is of the button and that covers the sliding block and the sliding block, and the spacing d is less than the maximum pressing stroke of the touch-press part. Therefore, regardless of how much pressing force is applied by the user to the button, the electronic switch is not damaged.

According to a second aspect, a vehicle door is provided. The vehicle door includes a door body, a vehicle door lock, and the press switch according to the first aspect. Both the vehicle door lock and the press switch are assembled on the door body, and the vehicle door lock is the locking member.

A button is assembled on an operation panel of the door body, the button covers the touch-press part of the electronic switch, and the button is used to touch/press the electronic switch and/or press the sliding block to slide.

For example, when the button is touched or pressed with a small force, the press switch performs an electronic switch function. When the button is pressed with a large force, the press switch performs a mechanical switch function.

In the solutions shown in the present disclosure, the sliding block of the press switch may be directly connected to the connector of the locking member, or may be connected to the connector of the locking member by using the transmission assembly. In a solution in which the sliding block is connected to the connector of the locking member by using the transmission assembly, the transmission assembly is assembled on the base, and the first sliding pillar of the transmission assembly that is used to drive the connector to move may slide along the side wall of the base.

According to a third aspect, a vehicle door is provided. The vehicle door includes a door body, a vehicle door lock, a transmission assembly, and the press switch according to the first aspect. The vehicle door lock, the transmission assembly, and the press switch are all assembled on the door body. The sliding block of the press switch is connected to the vehicle door lock by using the transmission assembly, where the vehicle door lock is the locking member.

A button is assembled on an operation panel of the door body, the button covers the touch-press part of the electronic switch, and the button is used to touch/press the electronic switch and/or press the sliding block to slide.

In the solutions shown in the present disclosure, the sliding block of the press switch is connected to the connector of the locking member by using the transmission assembly. The transmission assembly is assembled on the door body. For example, the transmission assembly may be directly assembled on the door body, or may be assembled on the door body by using a support. The first sliding pillar of the transmission assembly that is used to drive the connector to move may slide on the door body, or may slide on the support.

According to a fourth aspect, a vehicle is further provided. The vehicle includes the vehicle door according to the second aspect or the third aspect.

In the solutions shown in the present disclosure, the press switch includes the electronic switch and the sliding block. The electronic switch is electrically connected to the controller that controls the locking member, and the sliding block is connected to the locking member, so that the press switch has both a mechanical switch function and an electronic switch function, thereby ensuring both intelligence and safety of the press switch. The electronic switch is located at one end of the sliding block, so that a touch-press position at which the press switch performs the electronic switch and a press position at which the press switch performs a mechanical switch are the same. This arrangement simplifies a component layout of the press switch, which helps reduce costs of the press switch. Moreover, an operation of the press switch is simplified, which helps improve safety in an emergency. This prevents a user from pressing a wrong position in an emergency in which the electronic switch function fails.

In addition, when the electronic switch is touched/pressed, a pressing force for pushing the electronic switch to perform the electronic switch function is less than or even far less than a pressing force for pushing the sliding block to slide to perform the mechanical switch function. Therefore, when the user touches/presses the press switch with a normal force, only the electronic switch is pressed, and the sliding block does not slide. Therefore, when the press switch performs the electronic switch function, the sliding block used to perform the mechanical switch function does not slide, thereby improving user experience.

### BRIEF DESCRIPTION OF DRAWINGS

FIG. 1 is a diagram of a press switch according to an example embodiment of the present disclosure;
FIG. 2 is a cross-sectional diagram of a press switch according to an example embodiment of the present disclosure;
FIG. 3 is a cross-sectional diagram of a press switch according to an example embodiment of the present disclosure;
FIG. 4 is a cross-sectional diagram of a press switch in a fully pressed state according to an example embodiment of the present disclosure;
FIG. 5 is a cross-sectional diagram of a press switch according to an example embodiment of the present disclosure;
FIG. 6 is a cross-sectional diagram of a press switch according to an example embodiment of the present disclosure;
FIG. 7 is a cross-sectional diagram of a press switch according to an example embodiment of the present disclosure;
FIG. 8 is a diagram of a press switch whose transmission member is a lever according to an example embodiment of the present disclosure;
FIG. 9 is a diagram of a press switch whose transmission member is a cable according to an example embodiment of the present disclosure;
FIG. 10 is a diagram of a press switch whose transmission member is a connecting rod according to an example embodiment of the present disclosure;
FIG. 11 is a diagram of a press switch whose transmission member including a gear and a cable according to an example embodiment of the present disclosure;
FIG. 12 is a cross-sectional diagram of the press switch shown in FIG. 11 according to an example embodiment of the present disclosure;
FIG. 13 is a diagram of a press switch according to an example embodiment of the present disclosure;
FIG. 14 is a diagram of a structure of a base of the press switch shown in FIG. 13 according to an example embodiment of the present disclosure;
FIG. 15 is a diagram of an assembly relationship between a button, an electronic switch, and a sliding block according to an example embodiment of the present disclosure;
FIG. 16 is a diagram of an assembly relationship between a button, an electronic switch, a sliding block, and a base according to an example embodiment of the present disclosure; and
FIG. 17 is a diagram in which a sliding block drive, by using a first gear and a second gear, a first sliding pillar to slide according to an example embodiment of the present disclosure.

Reference numerals:
1: base; 11: top wall; 12: side wall; 13: first sliding groove; 14: a second sliding groove; 131: second groove.
111: assembly opening; 121: first elongated hole; 122: second elongated hole; 123: rotating shaft; 124: fixed pulley.
2: sliding block; 20: first groove; 21: first end; 22: second end; 23: first side portion; 24: second side portion; 25: second sliding pillar; 26: rack; 27: third sliding groove.
3: electronic switch; 31: touch-press part.
4: button; 5: first elastic member; 6: second elastic member; 61: spring; 62: contact block.
7: transmission assembly; 71: first sliding pillar; 72: transmission member; 711: first rack; 721: first rod portion; 722: second rod portion; 723: gear; 724: cable; 725: first gear; 726: second gear; 727: third gear; 7211: first elongated rotary hole; 7221: second elongated rotary hole.
10: connector.
a: first inclined surface; b: second inclined surface; c: third inclined surface.

### DESCRIPTION OF EMBODIMENTS

To make the objectives, technical solutions, and advantages of the present disclosure clearer, the following further describes the implementations of the present disclosure in detail with reference to the accompanying drawings.

An embodiment relates to a press switch. The press switch integrates an electronic switch and a mechanical switch. When a user touches/presses the press switch with a small force, the electronic switch is triggered to perform an unlocking or locking function. When the user touches/presses the press switch with a large force, the mechanical switch is triggered to perform the unlocking or locking function. In this way, even if the electronic switch fails due to a line fault or a power outage, the unlocking or locking function can still be performed by using the mechanical switch, thereby improving use safety of the press switch.

The press switch may be used on a vehicle door of a vehicle, and is configured to control a vehicle door lock to unlock, so as to open the vehicle door. For example, the press switch may be mounted on an inner side of the vehicle door. For another example, the press switch may be mounted on an outer side of the vehicle door.

The press switch may alternatively be used in an electronic door to unlock or lock a door lock of the electronic door. An application scenario of the press switch is not limited in this embodiment, and the press switch may be used in any scenario in which a switch is required. For ease of understanding, an example in which the press switch is used on the vehicle door to unlock or lock the vehicle door lock may be used.

The following describes a structural feature of the press switch.

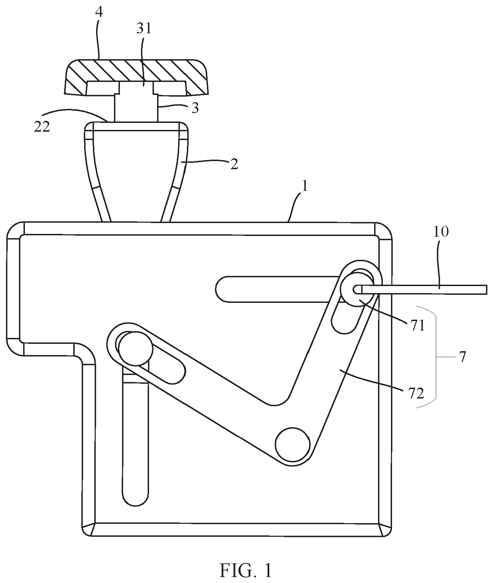

FIG. 1 is a diagram of a structure of a press switch. A partial cross-sectional view of a button 4 is shown in FIG. 1. Refer to FIG. 1. The press switch includes a base 1, a sliding block 2, and an electronic switch 3. The base 1 is of a box shape, and the sliding block 2 is of a long strip shape. A first end 21 (not shown in FIG. 1) of the sliding block 2 extends into the base 1, and the electronic switch 3 is located at a second end 22 of the sliding block 2. Positions of the first end 21 and the second end 22 of the sliding block 2 are opposite to each other.

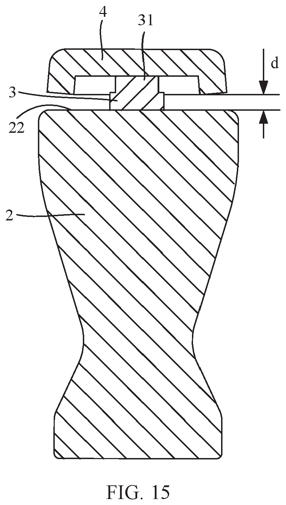

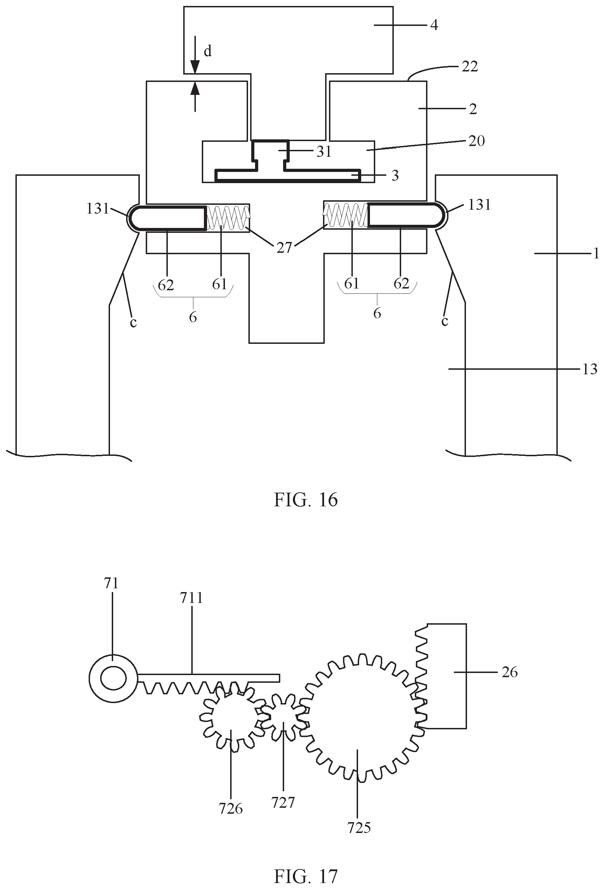

The electronic switch 3 is located at the second end 22 of the sliding block 2. For example, as shown in FIG. 15, the electronic switch 3 is located on an outer end surface of the second end 22 of the sliding block 2. For another example, as shown in FIG. 16, the second end 22 of the sliding block 2 is provided with a first groove 20, and the electronic switch 3 is located in the first groove 20. A groove opening of the first groove 20 is provided on an outer end surface of the second end 22.

In an example, the sliding block 2 can slide back and forth relative to the base 1, and the sliding block 2 is configured to connect to the locking member. For example, as shown in FIG. 1, the sliding block 2 is connected to a connector 10 of the locking member by using a transmission assembly 7. During sliding, the sliding block 2 can pull or push the locking member to unlock or lock the locking member, so that the press switch has a mechanical switch function.

In an example, the electronic switch 3 is configured to electrically connect to a controller that controls the locking member. When a touch-press part 31 of the electronic switch 3 is touched/pressed, a touch-press signal can be sent to the controller. After receiving the touch-press signal, the controller controls the locking member to unlock or lock, so that the press switch has an electronic switch function.

The electronic switch 3 may include but is not limited to a touch switch or a pressure switch. If the electronic switch 3 is a touch switch, the touch-press signal may be a touch signal. If the electronic switch 3 is a pressure switch, the touch-press signal may be a pressure signal. The pressure switch includes but is not limited to a micro switch, a pressure-sensitive capacitor switch, or the like.

It can be learned that the press switch has both the mechanical switch function and the electronic switch function, thereby ensuring both intelligence and safety of the press switch.

In an example, refer to FIG. 1. The press switch may further include the button 4 for the user to touch/press or press. The button 4 covers the touch-press part 31 of the electronic switch 3, and is used to touch/press the touch-press part 31 of the electronic switch 3, and is also used to press the sliding block 2 to push the sliding block 2 to slide.

In another example, the press switch may alternatively not include the button 4. After the press switch is assembled in a vehicle door, the button 4 may be assembled above the touch-press part 31 of the electronic switch 3. The button 4 is in clearance fit with an operation panel of a door body, and the button 4 covers the touch-press part 31, is used to touch/press the touch-press part 31 of the electronic switch 3, and is also used to press the sliding block 2 to push the sliding block 2 to slide.

Whether the press switch includes the button 4 is not specifically limited in this embodiment. However, regardless of whether the press switch includes the button 4, the button 4 is positioned to cover the touch-press part 31. In terms of functions, the button 4 is used to touch/press the touch-press part 31 of the electronic switch 3 and is also used to press the sliding block 2 to push the sliding block 2 to slide.

In an example, because the electronic switch 3 is located at the second end 22 of the sliding block 2, the button 4 covers the touch-press part 31 and is configured to touch/press the touch-press part 31, and the button 4 is also configured to press the sliding block 2 to slide, a touch-press position of the electronic switch 3 is the same as a press position at which the sliding block 2 is pressed to slide. That is, the touch-press position and the press position are the same, and are a position at which the button 4 is located. Therefore, when the button 4 is touched/pressed, the electronic switch 3 can be triggered, and the sliding block 2 can also be triggered to slide.

For example, the electronic switch 3 is a touch switch. When the user touches the button 4, the electronic switch 3 may be triggered to perform the electronic switch function. When the user presses the button 4 hard, the sliding block 2 may be triggered to slide. After the sliding block 2 slides for a specific stroke, the mechanical switch function may be triggered.

For another example, the electronic switch 3 is a micro switch. The micro switch is a sensitive switch that allows the touch-press part 31 to be pressed with a slight force. Therefore, when the user presses the button 4 with a small force, the electronic switch 3 may be triggered to perform the electronic switch function. When the user presses the button 4 with a large force, the sliding block 2 may be triggered to slide, and after the sliding block 2 slides for a specific stroke, a mechanical switch function of unlocking or locking the locking member may be triggered.

In a solution in which the electronic switch 3 is a pressure switch (such as a micro switch), a sliding direction of the sliding block 2 is consistent with a pressing direction of the touch-press part 31 of the electronic switch 3.

It can be learned that, the touch-press position at which the press switch performs the electronic switch function and the press position at which the electronic switch performs the mechanical switch function are the same, and are a position at which the button 4 is located. This simplifies a component layout of the press switch, which helps reduce costs of the press switch. Moreover, an operation of the press switch is simplified, which helps improve safety in an emergency. This is because in an emergency in which the electronic switch function fails, an instinctive and intuitive operation of the user is to press the button 4 with a larger force. Therefore, the user is less likely to press a wrong position in an emergency, further improving safety of the press switch.

In an example, the electronic switch 3 bears a limited pressing force. For example, if an acting force applied to the electronic switch 3 is too large, the electronic switch 3 is damaged, and a relatively large acting force is required to trigger sliding of the sliding block 2. Therefore, to avoid damage to the electronic switch 3 below the button 4 due to a large pressing force on the button 4, correspondingly, as shown in FIG. 15 and FIG. 16, the button 4 not only covers the touch-press part 31 of the electronic switch 3, but also covers the sliding block 2. In addition, a minimum spacing d between a part that is of the button 4 and that covers the sliding block 2 and the outer end surface of the second end 22 of the sliding block 2 is less than or equal to a maximum pressing stroke of the touch-press part 31 of the electronic switch 3.

For example, as shown in FIG. 15 and FIG. 16, the minimum spacing d between the part that is of the button 4 and that covers the sliding block 2 and the sliding block 2 is 1.2 millimeters, and the maximum pressing stroke of the touch-press part 31 of the electronic switch 3 is about 1.5 millimeters.

In this way, when the user presses the button 4 with a small force, the button 4 slides relative to the sliding block 2, and a maximum sliding stroke of the button 4 relative to the sliding block 2 is the minimum spacing d between the sliding block 2 and the part that is of the button 4 and that covers the sliding block 2. When sliding relative to the sliding block 2, the button 4 touches/presses the touch-press part 31 of the electronic switch 3, to trigger the electronic switch function of the electronic switch 3.

When the user presses the button 4 with a large force, after a sliding stroke of the button 4 relative to the sliding block 2 reaches the maximum sliding stroke, the part that is of the button 4 and that covers the sliding block 2 abuts against the sliding block 2. In this case, an acting force applied by the button 4 downward is distributed to the sliding block 2, instead of being completely applied to the electronic switch 3. Then, regardless of how much force is applied by the user, a pressing stroke of the touch-press part 31 of the electronic switch 3 is equal to the minimum spacing d between the part that is of the button 4 and that covers the sliding block 2 and the sliding block 2, and the spacing d is less than the maximum pressing stroke of the touch-press part 31. Therefore, regardless of how much pressing force is applied by the user to the button 4, the electronic switch 3 is not damaged.

The part of the button 4 covers the touch-press part 31 of the electronic switch 3, and another part of the button 4 covers the sliding block 2. For example, as shown in FIG. 15 and FIG. 16, a part that is of the button 4 and that closes to a center of the button 4 covers the touch-press part 31, and a part that is of the button 4 and that closes to an edge of the button 4 in a circumferential direction covers the sliding block 2.

For an assembly relationship between the button 4, the electronic switch 3, and the sliding block 2, for example, as shown in FIG. 15, the electronic switch 3 is located on the outer end surface of the second end 22 of the sliding block 2, the button 4 covers the top of the electronic switch 3, and positions of a part of the button 4 and the outer end surface of the second end 22 of the sliding block 2 are opposite to each other. A minimum spacing between the outer end surface of the second end 22 of the sliding block 2 and the part that is of the button 4 and whose position is opposite to the position of the outer end surface of the second end 22 of the sliding block 2 is d.

For another example, as shown in FIG. 16, the second end 22 of the sliding block 2 is provided with the first groove 20, and the electronic switch 3 is located in the first groove 20. A part of the button 4 extends into the first groove 20, and covers the electronic switch 3, and a part that is of the button 4 and that does not extend into the first groove 20 covers the outer end surface of the second end 22 of the sliding block 2. A minimum spacing between the part that is of the button 4 and that does not extend into the first groove 20 and the outer end surface of the second end 22 of the sliding block 2 is d.

In an example, to trigger sliding of the sliding block 2 only when the user presses the button 4 with a large force, the sliding block 2 may slide in a sliding groove of the base 1, and there is static friction between the sliding block 2 and the sliding groove. In this way, an acting force applied by the user to the button 4 needs to overcome the static friction between the sliding block 2 and the sliding groove, so that the sliding block 2 can slide.

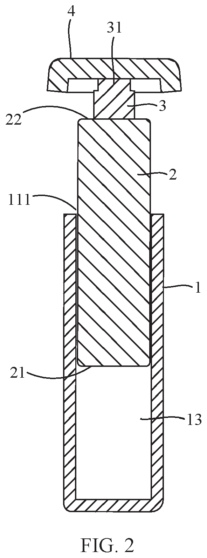

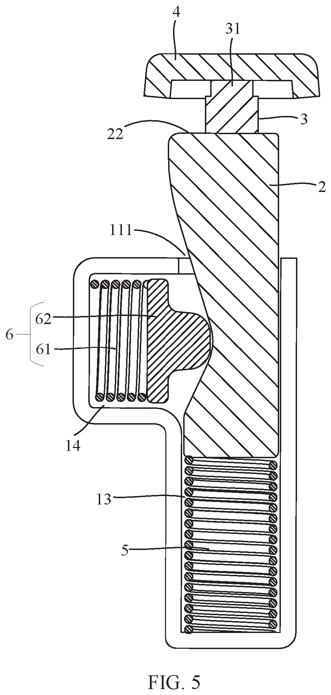

Correspondingly, as shown in FIG. 2, a top wall 11 of the base 1 is provided with an assembly opening 111, the base 1 has a first sliding groove 13, and the assembly opening 111 communicates with the first sliding groove 13. For example, as shown in FIG. 2, the assembly opening 111 is a groove opening of the first sliding groove 13, or as shown in FIG. 5, a groove opening of the first sliding groove 13 faces the assembly opening 111. In this way, still refer to FIG. 2. The first end 21 of the sliding block 2 extends into the first sliding groove 13 through the assembly opening 111, and the sliding block 2 is in contact with the first sliding groove 13.

The sliding block 2 is never detached from the first sliding groove 13 while sliding in the base 1. To be specific, the first end 21 of the sliding block 2 is always located in the first sliding groove 13 while the sliding block 2 slides in the base 1, so that the first sliding groove 13 has a circumferential limiting function for the sliding block 2. This can prevent the sliding block 2 from being stuck during reset, and prevent the sliding block 2 from shaking in the base 1.

As shown in FIG. 2, static friction between the sliding block 2 and the first sliding groove 13 may be increased to increase a force for driving the sliding block 2 to slide. A method for increasing the static friction between the sliding block 2 and the first sliding groove 13 may include: increasing roughness of a surface that is of the sliding block 2 and that is in contact with the first sliding groove 13, and/or increasing roughness of a surface that is of the first sliding groove 13 and that is in contact with the sliding block 2. A manner of increasing roughness of a surface may include: plating a coating with high roughness on the surface, etching some grooves and some trenches, or the like on the surface, or disposing some bumps on the surface.

In an example, to meet a condition in which a user touches the button 4 or presses the button 4 with a small force, the touch-press part 31 of the electronic switch 3 is touched/pressed, and the sliding block 2 does not slide, correspondingly, the static friction between the sliding block 2 and the first sliding groove 13 is greater than an acting force required for pressing the touch-press part 31 of the electronic switch 3. For example, the static friction between the sliding block 2 and the first sliding groove 13 is far greater than a minimum acting force required for pressing the touch-press part 31 of the electronic switch 3. Usually, if the user applies an acting force of 5 N to 8 N to the button 4, the touch-press part 31 of the electronic switch 3 can be pressed. Therefore, the static friction between the sliding block 2 and the first sliding groove 13 may be greater than, or even far greater than 8 N.

It should be noted that, unless otherwise specified, the description that the touch-press part 31 is pressed is for a solution in which the electronic switch is a pressure switch. For a solution in which the electronic switch is a touch switch, the touch-press part is not pressed.

In this way, when the user presses the button 4 with a normal force, only the touch-press part 31 of the electronic switch 3 is touched/pressed, and the sliding block 2 is still static and does not slide. However, when the user touches the button 4 or presses the button 4 with a normal force, but the locking member cannot be unlocked or locked, the user subconsciously increases the force. In this case, the sliding block 2 is triggered to slide, to perform mechanical unlocking or mechanical locking.

In an example, after the user no longer applies an acting force to the button 4, the touch-press part 31 of the electronic switch 3 is reset under action of a reset structure inside the electronic switch 3. If the sliding block 2 is pressed, the sliding block 2 can also be reset after the user releases a hand. For example, as described above, the sliding block 2 is connected to the locking member, and there is the reset structure inside the locking member. The reset structure inside the locking member can also drive the sliding block 2 to reset while driving the locking member to reset.

It should be noted that, an acting force applied to the sliding block 2 during reset of the locking member is greater than static friction (for example, the static friction between the sliding block 2 and the first sliding groove 13) applied to the sliding block 2, to push the sliding block 2 to reset.

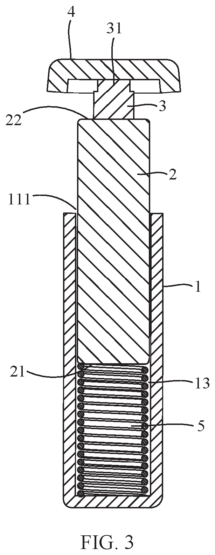

In an example, to further enable the pressed sliding block 2 to be reset, correspondingly, as shown in FIG. 3, the press switch further includes a first elastic member 5. The first elastic member 5 is located in the first sliding groove 13 and abuts against an end surface of the first end 21 of the sliding block 2, and an expansion/contraction direction of the first elastic member 5 is consistent with the sliding direction of the sliding block 2.

Unless otherwise specified, the abutment described above and below may be understood as always maintaining contact.

It should be noted that, when the sliding block 2 is in a normal state, that is, in a state in which the button 4 is not subjected to external pressure, or in a state in which an acting force applied to the button 4 is insufficient to push the sliding block 2 to slide, the first elastic member 5 may be in a natural state, or may be in a compressed state. A state of the first elastic member 5 is related to an assembly position of the press switch. For example, the press switch is vertically assembled in the vehicle door, and the user presses down the button 4 to trigger the locking member. In this case, the first elastic member 5 is located below the sliding block 2, and is in the compressed state due to gravity of the sliding block 2. For another example, the press switch is horizontally assembled in the vehicle door, and the user presses the button 4 toward the outside of the vehicle door. In this case, the first elastic member 5 and the sliding block 2 are located at a same height, and the first elastic member 5 is closer to the outside of the vehicle door than the sliding block 2. In this position relationship, the first elastic member 5 is in the natural state.

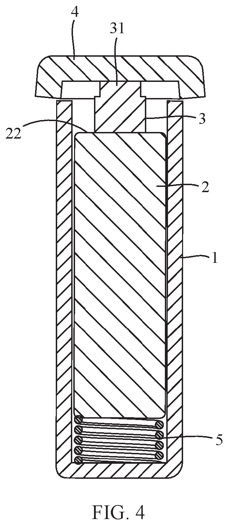

The first elastic member 5 abuts against the sliding block 2, and the expansion/contraction direction of the first elastic member 5 is consistent with the sliding direction of the sliding block 2. Therefore, the first elastic member 5 is compressed gradually in a sliding process in which the sliding block 2 is pressed. When the sliding block 2 is completely pressed, as shown in FIG. 4, the first elastic member 5 is in the compressed state. After the acting force on the button 4 is removed, the first elastic member 5 in the compressed state is reset, and the first elastic member 5 pushes the sliding block 2 to reset during the reset. It can be learned that, in the solutions in which the press switch includes the first elastic member 5, the sliding block 2 is reset through resetting of the locking member and the first elastic member 5.

It should be noted that a sum of the acting force applied to the sliding block 2 during reset of the locking member and the acting force applied to the sliding block 2 during reset of the first elastic member 5 is greater than static friction applied to the sliding block 2. In a solution shown in FIG. 3 and FIG. 4, the static friction applied to the sliding block 2 is the static friction between the sliding block 2 and the first sliding groove 13.

In an example, the first elastic member 5 is any structure capable of expansion/contraction movement. For example, as shown in FIG. 3 and FIG. 4, the first elastic member 5 is a spring. In another example, the first elastic member 5 may alternatively be a rubber block, a silicone block, or the like, and can be compressed under an external force, and can be reset after the external force is removed.

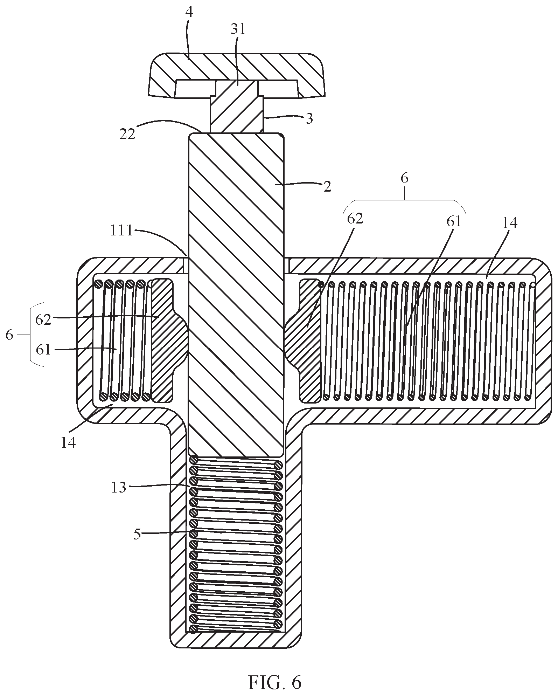

In an example, to further increase the acting force for pushing the sliding block 2 to slide, so as to avoid sliding of the sliding block 2 when the electronic switch 3 is touched/pressed, as shown in FIG. 5, the press switch may further include a second elastic member 6. The second elastic member 6 is located in the base 1. For example, as shown in FIG. 5, the second elastic member 6 is located in a second sliding groove 14, where a groove opening of the second sliding groove 14 faces a side portion of the sliding block 2. The second elastic member 6 is configured to abut against the sliding block 2. For example, the second elastic member 6 is provided between and abuts against the base 1 and a side surface of at least one side portion of the sliding block 2. That is, as shown in FIG. 5 and FIG. 6, the second elastic member 6 is provided between and abuts against a groove bottom of the second sliding groove 14 and the side surface of the at least one side portion of the sliding block 2.

The second elastic member 6 is configured to prevent the sliding block 2 from sliding in the base 1 when the button 4 is pressed. For example, when the sliding block 2 tends to slide while being pressed, or when the sliding block 2 is sliding while being pressed, the second elastic member 6 is configured to prevent the sliding block 2 from sliding.

The following first describes a position relationship between the second elastic member 6 and the sliding block 2, and then describes a solution in which the second elastic member 6 blocks the sliding of the sliding block 2.

In an example, a circumferential side around the sliding direction of the sliding block 2 may be referred to as the side portion of the sliding block 2. In this case, the side portion that is of the sliding block 2 and that abuts against the second elastic member 6 may include at least one of a left side portion, a right side portion, a front side portion, and a rear side portion.

For example, as shown in FIG. 5, the second elastic member 6 is provided between and abuts against a first side portion 23 of the sliding block 2 and an inner wall of the base 1, and the first side portion 23 of the sliding block 2 may be any side portion of the sliding block 2 (a left side portion is used as an example in FIG. 5). For another example, as shown in FIG. 6, there are two second elastic members 6. One second elastic member 6 is provided between and abuts against the first side portion 23 of the sliding block 2 and the inner wall of the base 1, and the other second elastic member 6 is provided between and abuts against a second side portion 24 of the sliding block 2 and the inner wall of the base 1.

The first side portion 23 and the second side portion 24 of the sliding block 2 may be two side portions at opposite positions of the sliding block 2. For example, the first side portion 23 is a left side portion of the sliding block 2, and the second side portion 24 is a right side portion of the sliding block 2. For another example, the first side portion 23 is a front side portion of the sliding block 2, and the second side portion 24 is a rear side portion of the sliding block 2.

Alternatively, the first side portion 23 and the second side portion 24 of the sliding block 2 may be two side portions of the sliding block 2 that are adjacent to each other. For example, the first side portion 23 is a left side portion of the sliding block 2, and the second side portion 24 may be a front side portion or a rear side portion of the sliding block 2. For another example, the first side portion 23 is a right side portion of the sliding block 2, and the second side portion 24 may be a front side portion or a rear side portion of the sliding block 2.

For another example, the second elastic member 6 is provided between and abuts against each of three side portions of the sliding block 2 and the inner wall of the base 1. For another example, the second elastic member 6 is provided between and abuts against each of four side portions of the sliding block 2 and the inner wall of the base 1.

In this embodiment, a quantity of side portions of the sliding block 2 that are in contact with the second elastic member 6 against the inner wall of the base 1 is not specifically limited, and may be flexibly selected according to an actual situation. In the following and subsequent accompanying drawings, an example in which the second elastic member 6 is provided between and abuts against each of the first side portion 23 and the second side portion 24 that are at opposite positions of the sliding block 2 and the inner wall of the base 1 is used.

In an example, like the first elastic member 5, the second elastic member 6 may also be any structure capable of expansion/contraction movement. For example, as shown in FIG. 6, the second elastic member 6 includes a spring 61. In another example, the second elastic member 6 may alternatively be a rubber block, a silicone block, or the like, and can be compressed under an external force, and can be reset after the external force is removed.

As described above, the second elastic member 6 abutting against the side portion of the sliding block 2 is configured to prevent the sliding block 2 from sliding in the base 1 when the button 4 is pressed.

In a solution, the second elastic member 6 may prevent the sliding block 2 from being pressed by increasing static friction between the second elastic member 6 and the sliding block 2.

For example, when the sliding block 2 is not pressed, the second elastic member 6 is in the compressed state. In this case, the second elastic member 6 in the compressed state applies an acting force on the sliding block 2. The acting force allows the second elastic member 6 to be in close contact with the sliding block 2, so that the static friction between the second elastic member 6 and the sliding block 2 can be enhanced. Therefore, the second elastic member 6 can be used to prevent the sliding block 2 from being pressed.

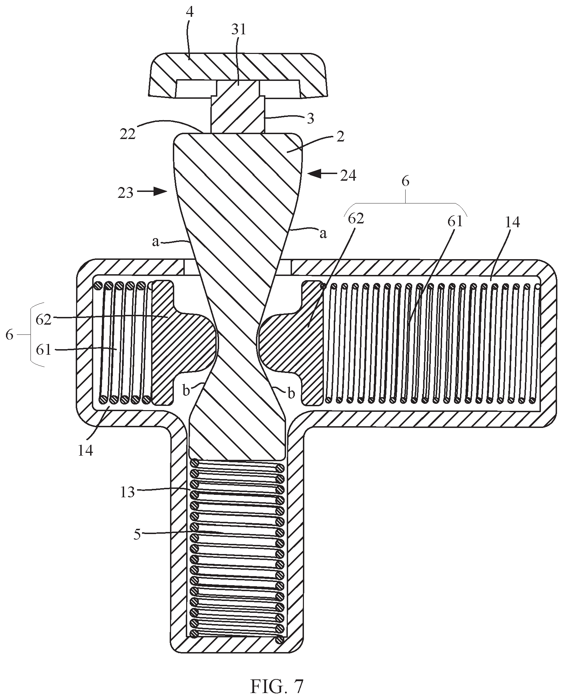

If the second elastic member 6 provides elasticity through the spring 61, due to a small contact area between the spring 61 and the sliding block 2, static friction between the second elastic member 6 and the sliding block 2 is small. As shown in FIG. 7, the second elastic member 6 further includes a contact block 62. One end of the spring 61 abuts against the inner wall of the base 1, the other end of the spring 61 abuts against or is fastened to the contact block 62, and the contact block 62 abuts against the sliding block 2. In this way, a contact area between the second elastic member 6 and the sliding block 2 may be increased, thereby increasing the static friction between the second elastic member 6 and the sliding block 2.

If the second elastic member 6 is a flexible block such as a rubber block or a silicone block, the second elastic member 6 may not include the contact block 62. In the following and subsequent accompanying drawings, an example in which the second elastic member 6 includes the spring 61 and the contact block 62 may be used for description.

In an example, to increase the static friction between the second elastic member 6 and the sliding block 2, correspondingly, roughness of a surface that is of the sliding block 2 and that is in contact with the second elastic member 6 may be increased, and/or roughness of a surface that is of the second elastic member 6 and that is in contact with the sliding block 2 may be increased. For a manner of increasing roughness of the surface, refer to the foregoing description. Details are not described herein again. In the solutions in which the second elastic member 6 includes the contact block 62, the static friction between the second elastic member 6 and the sliding block 2 may be increased by increasing roughness of a surface that is of the contact block 62 and that is in contact with the sliding block 2.

In another solution, the second elastic member 6 may alternatively apply an acting force to the sliding block 2 opposite to the sliding direction of the sliding block 2, to prevent the sliding block 2 from being pressed or from sliding.

For example, when the button 4 is pressed to slide the sliding block 2, or when the button 4 is pressed and the sliding block 2 tends to slide, the second elastic member 6 may apply the acting force to the sliding block 2 opposite to the sliding direction or a sliding trend direction of the sliding block 2, to prevent the sliding block 2 from sliding.

In an example, as shown in FIG. 7, a side surface of a side portion that is of the sliding block 2 and that abuts against the second elastic member 6 has an inclined surface. The inclined surface is configured to gradually compress the second elastic member 6 in a process of pressing the sliding block 2.

It should be noted that, that the side surface of the side portion that is of the sliding block 2 and that abuts against the second elastic member 6 has the inclined surface may mean that side surfaces of one or more side portions that are of the sliding block 2 and that abut against the second elastic member 6 have an inclined surface, or side surfaces of all side portions that are of the sliding block 2 and that abut against the second elastic member 6 have an inclined surface. This is not limited in this embodiment. For example, as shown in FIG. 7, side surfaces of all side portions that are of the sliding block 2 and that abut against the second elastic member 6 have an inclined surface. For example, a side surface of the first side portion 23 has an inclined surface, and a side surface of the second side portion 24 also has an inclined surface.

In an example, in the solutions shown in FIG. 7, when the sliding block 2 is not pressed, that is, when the sliding block 2 does not slide, the second elastic member 6 may be in the compressed state, or may be in the natural state. When the second elastic member 6 is in the compressed state, in a sliding process in which the sliding block 2 is pressed, or when the sliding block 2 tends to slide under pressing, the second elastic member 6 can increase the static friction between the second elastic member 6 and the sliding block 2 and the acting force that is applied to the sliding block 2 opposite to the sliding direction of the sliding block 2, to prevent the sliding block 2 from sliding.

For example, when the second elastic member 6 is compressed, an acting force perpendicular to the inclined surface is applied to the sliding block 2, and the acting force has a component force opposite to the sliding direction of the sliding block 2, thereby preventing the sliding block 2 from being pressed or from sliding.

In an example, the sliding block 2 is in the normal state. To enable the sliding block 2 to be stable in the base 1, correspondingly, still with reference to FIG. 7, the foregoing inclined surface may include a first inclined surface a and a second inclined surface b. The first inclined surface a is connected to the second inclined surface b, one is close to the first end 21 of the sliding block 2, and the other is close to the second end 22 of the sliding block 2. A junction between the first inclined surface a and the second inclined surface b is a recess of the side surface on which the first inclined surface a and the second inclined surface b are located. When the sliding block 2 is not pressed, that is, when the sliding block 2 does not slide, the second elastic member 6 abuts against the recess, so that the second elastic member 6 is clamped with the sliding block 2, for example, the contact block 62 of the second elastic member 6 is clamped with the sliding block 2, to enhance stability of the sliding block 2.

Still refer to FIG. 7. The inclined surface close to the second end 22 of the sliding block 2 is configured to gradually compress the second elastic member 6 in the process of pressing the sliding block 2. For example, if the first inclined surface a is close to the second end 22 of the sliding block 2, the first inclined surface a is configured to gradually compress the second elastic member 6 in the process of pressing the sliding block 2.

It should be noted that the second inclined surface b close to the first end 21 of the sliding block 2 may alternatively be replaced by a plane parallel to the sliding direction of the sliding block 2. That is, the side surface of the sliding block 2 includes only the first inclined surface a close to the second end 22.

Based on the foregoing description, when the user touches/presses the button 4, if an applied force is small and insufficient to overcome a resistance applied to the sliding block 2, but can trigger an action of the touch-press part 31 of the electronic switch 3, the press switch unlocks or locks the locking member by using the electronic switch 3 (that is, performs the electronic switch function). However, if an acting force applied by the user is large enough to overcome the resistance applied to the sliding block 2, and a sliding stroke of the sliding block 2 meets a stroke required for unlocking or locking the locking member, the press switch unlocks or locks the locking member by sliding the sliding block 2 (that is, performs the mechanical switch function).

In an example, in a solution in which the electronic switch 3 is a pressure switch, an acting force required for pressing the touch-press part 31 of the electronic switch 3 is less than a resistance applied to the sliding block 2 during sliding under pressing.

The resistance applied to the sliding block 2 during sliding under pressing may be the static friction between the sliding block 2 and the first sliding groove 13 (refer to FIG. 2).

Alternatively, the resistance applied to the sliding block 2 during sliding under pressing includes the static friction between the sliding block 2 and the first sliding groove 13 and the static friction between the sliding block 2 and the second elastic member 6 (refer to FIG. 6).

Alternatively, the resistance applied to the sliding block 2 during sliding under pressing includes the static friction between the sliding block 2 and the first sliding groove 13, the static friction between the sliding block 2 and the second elastic member 6, and an elastic force of the second elastic member 6 on the sliding block 2 (refer to FIG. 7).

Because the acting force required for pressing the touch-press part 31 of the electronic switch 3 is less than the resistance applied to the sliding block 2 during sliding under pressing, when an acting force applied by the user for pressing the button 4 is small, only the touch-press part 31 of the electronic switch 3 is pressed, and the sliding block 2 does not slide. In this way, the electronic switch function and the mechanical switch function of the press switch are obviously distinguished, which can improve user experience.

In an example, in the solutions in which the electronic switch 3 is the pressure switch, the acting force required for pressing the touch-press part 31 of the electronic switch 3 is usually related to a structure of the electronic switch 3. Generally, the acting force ranges from 5 N to 8 N, and a stroke of the touch-press part 31 is about 1.5 mm. When the sliding block 2 is driven to slide, and a sliding stroke of the sliding block 2 meets an unlocking stroke or a locking stroke of the locking member, an acting force (that is, a pressing force) required by the sliding block 2 may be set through simulation and testing. For example, the acting force required by the sliding block 2 ranges from 20 N to 50 N. When the locking member performs unlocking or locking, a moving stroke of the connector 10 of the locking member is about 12±2 mm.

In an example, a driving force applied to the sliding block 2 during reset is greater than the resistance applied to the sliding block 2. The driving force applied to the sliding block 2 during reset may be an acting force applied by the locking member during reset to the sliding block 2 (refer to FIG. 1 and FIG. 2). Alternatively, the driving force applied to the sliding block 2 during reset includes an acting force applied by the locking member during reset to the sliding block 2, and an acting force applied by the first elastic member 5 during reset to the sliding block 2 (refer to FIG. 3). The resistance applied to the sliding block 2 during reset may be sliding friction between the sliding block 2 and the first sliding groove 13, or the resistance applied to the sliding block 2 during reset may include sliding friction between the sliding block 2 and the first sliding groove 13 and sliding friction between the sliding block 2 and the second elastic member 6, or the resistance applied to the sliding block 2 during reset includes sliding friction between the sliding block 2 and the first sliding groove 13, sliding friction between the sliding block 2 and the second elastic member 6, and the elastic force of the second elastic member 6 on the sliding block 2.

In the above description, the second elastic member 6 is arranged in the second sliding groove 14 of the base 1. In another example, a base 1 may not include a second sliding groove 14, but includes only a first sliding groove 13. A second elastic member 6 is located in a sliding block 2. Refer to FIG. 16. One end of the second elastic member 6 located in the sliding block 2 extends out of the sliding block 2 and abuts against a groove wall of the first sliding groove 13. In this way, the second elastic member 6 can also is provided between and abuts against the sliding block 2 and the base 1.

As shown in FIG. 16, the sliding block 2 is provided with a third sliding groove 27. A groove opening of the third sliding groove 27 faces the groove wall of the first sliding groove 13, and the second elastic member 6 is located in the third sliding groove 27. One end of the second elastic member 6 abuts against a groove bottom of the third sliding groove 27, and the other end of the second elastic member 6 extends out of the third sliding groove 27 and abuts against the groove wall of the first sliding groove 13.

As described above, the second elastic member 6 may also include a spring 61 and a contact block 62. The spring 61 is compressed and located between the contact block 62 and the groove bottom of the third sliding groove 27. One end of the contact block 62 extends out of the third sliding groove 27 and abuts against the groove wall of the first sliding groove 13.

To increase a sliding damping of the sliding block 2, correspondingly, still with reference to FIG. 16, a side surface that is of the base 1 and that abuts against the second elastic member 6 is provided with a second groove 131, and an end part of the second elastic member 6 is engaged in the second groove 131.

For example, the second groove 131 is provided on the groove wall of the first sliding groove 13 and faces the third sliding groove 27. When the sliding block 2 is in an unpressed state, the end part of the contact block 62 of the second elastic member 6 is located in the second groove 131.

In this way, when the sliding block 2 is not pressed, the second elastic member 6 in the sliding block 2 is clamped with the base 1, so that the sliding damping of the sliding block 2 can be increased. A force of pressing a button 4 by a user needs to enable the contact block 62 of the second elastic member 6 to be detached from the second groove 131, so that the sliding block 2 can slide downward. Therefore, when the user presses the button 4 with a small force, the sliding block 2 does not slide, and only a touch-press part 31 of an electronic switch 3 is touched/pressed. In this way, a pressing force that triggers an electronic switch function can be decoupled from a pressing force that triggers a mechanical switch function. The user triggers only the electronic switch function normally, and the sliding block that triggers the mechanical switch function does not move, thereby improving user experience.

In an example, as shown in FIG. 16, the second groove 131 may be an arc-shaped groove or a spherical groove, and the end part of the contact block 62 is also of an arc-shaped or a spherical shape, to match the second groove 131.

In an example, still refer to FIG. 16. A side surface that is of the base 1 and that abuts against the second elastic member 6 may have an inclined surface. The inclined surface is configured to make the second elastic member 6 gradually extend in a process of pressing the sliding block 2.

For example, still refer to FIG. 16. A groove wall that is of the first sliding groove 13 and that is located between the second groove 131 and the groove bottom of the first sliding groove 13 is provided with an inclined surface (the inclined surface may be denoted as a third inclined surface c for distinguishing from the foregoing inclined surface). The third inclined surface c is configured to make the second elastic member 6 gradually extend in the process of pressing the sliding block 2 (which may be extended from a compressed state to a natural state, or may be extended from a compressed state with large elasticity to a compressed state with small elasticity).

In this way, when the user triggers the mechanical switch function, a large force is applied only when the contact block 62 is triggered to be detached from the second groove 131. Once the contact block 62 is detached from the second groove 131, the sliding block 2 slides. Then, the contact block 62 abuts against the third inclined surface c. The spring 62 gradually extends as the sliding block 2 continues to slide. In this case, sliding friction between the contact block 62 and the third inclined surface c is reduced, and the sliding damping of the sliding block 2 is reduced, so that the pressing force required by the sliding block 2 is also reduced, and the user does not need to continue to press the button 4 with a large force, thereby improving pressing experience of the user.

The following describes a transmission relationship between the sliding block 2 and the locking member.

As described above, the sliding block 2 is in transmission connection to the locking member. For example, the sliding block 2 may be directly connected to the locking member. For another example, the sliding block 2 is connected to the locking member by using a transmission assembly.

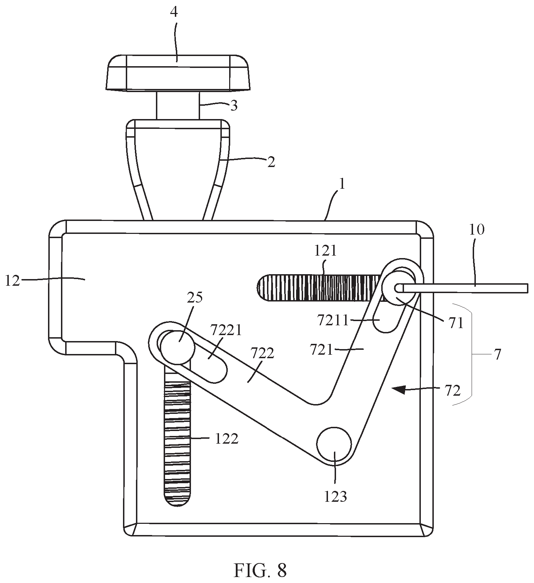

For example, as shown in FIG. 8, the press switch further includes the transmission assembly 7, the sliding block 2 is connected to the transmission assembly 7, and the transmission assembly 7 is connected to the locking member. Still refer to FIG. 8. The locking member usually has the connector 10, and the transmission assembly 7 is connected to the connector 10 of the locking member. The connector 10 may include at least one cable, or the connector 10 may include at least one rod component.

In an example, as shown in FIG. 8, the transmission assembly 7 may include a first sliding pillar 71 and a transmission member 72. One end of the transmission member 72 is connected to the sliding block 2, the other end of the transmission member 72 is connected to the first sliding pillar 71, and the first sliding pillar 71 is connected to the connector 10 of the locking member. Because the locking member has a moving stroke during unlocking or locking, the connector 10 has a moving stroke, and the first sliding pillar 71 also has a moving stroke.

To enable the first sliding pillar 71 to slide in a track, correspondingly, as shown in FIG. 8, a side wall 12 of the base 1 is provided with a first elongated hole 121. An elongation direction of the first elongated hole 121 is consistent with a moving direction for driving the locking member to unlock or lock. That is, the elongation direction of the first elongated hole 121 is consistent with a moving direction of the connector 10. The first sliding pillar 71 is located in the first elongated hole 121. The first sliding pillar 71 may be, for example, a pulley, capable of sliding back and forth along the elongation direction of the first elongated hole 121.

In this case, one end of the transmission member 72 is connected to the sliding block 2, and the other end is connected to the first sliding pillar 71. Therefore, during sliding of the sliding block 2, the transmission member 72 can drive the first sliding pillar 71 to slide, and the first sliding pillar 71 during sliding drives the connector 10 to move, thereby driving the locking member to unlock or lock.

The following describes several structural forms of the transmission member 72.

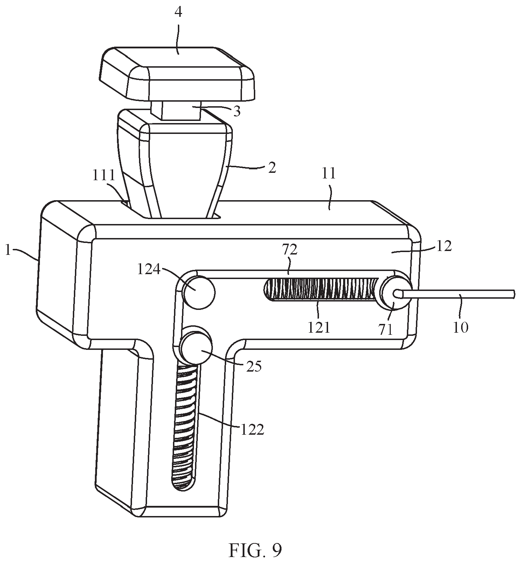

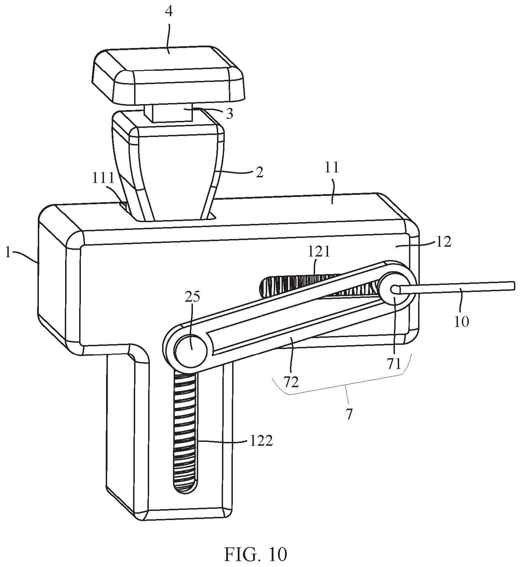

For example, as shown in FIG. 8, the transmission member 72 may be a lever. For another example, as shown in FIG. 9, the transmission member 72 may be a cable. For another example, as shown in FIG. 10, the transmission member 72 may alternatively be a connecting rod.

In an example, in a solution in which the transmission member 72 is a lever, a cable, or a connecting rod, to connect the transmission member 72 to the sliding block 2, correspondingly, with reference to FIG. 8, a side portion of the sliding block 2 is provided with a second sliding pillar 25. The side portion in which the second sliding pillar 25 is located is a side portion that is not abutted by the second elastic member 6. The second sliding pillar 25 extends out of the side wall 12 of the base 1 and is connected to the transmission member 72. The second sliding pillar 25 needs to slide. Therefore, as shown in FIG. 8, the side wall 12 of the base 1 is further provided with a second elongated hole 122. An elongation direction of the second elongated hole 122 is consistent with the sliding direction of the sliding block 2, where the sliding direction of the sliding block 2 is parallel to a pressing direction of the press switch.

A position relationship between the first elongated hole 121 and the second elongated hole 122 is related to a position relationship between the press switch and the locking member. For example, the press switch is used on a vehicle door. In the vehicle door, the press switch is usually located in front of a vehicle lock (that is, the locking member) (which is defined with a vehicle head as the front and a vehicle rear as the rear), and the press switch and the vehicle lock are distributed in a front-rear manner. The press switch and the vehicle lock are distributed in a front-rear manner. In this case, the connector 10 moves in a front-rear direction, and the sliding block 2 slides in an up-down direction or in the front-rear direction. Therefore, as shown in FIG. 8 to FIG. 10, a straight line on which the first elongated hole 121 is located intersects a straight line on which the second elongated hole 122 is located, for example, the two straight lines may be vertically intersected.

The straight line on which the first elongated hole 121 is located is a center line along the elongated shape, and the straight line on which the second elongated hole 122 is located is a center line along the elongated shape.

Still refer to FIG. 8. In a solution in which the transmission member 72 is a lever, the lever may be in a V shape. A sliding direction of the second sliding pillar 25 is associated with a sliding direction of the first sliding pillar 71 by using the V-shaped lever. The transmission member 72 includes a first rod portion 721 and a second rod portion 722. An intersection position of the first rod portion 721 and the second rod portion 722 is used as a pivot position of the lever, and is rotatably connected to the side wall 12 of the base 1. For example, a rotary hole is provided at the intersection of the first rod portion 721 and the second rod portion 722. A rotating shaft 123 is provided on the side wall 12 of the base 1. The rotating shaft 123 passes through the rotary hole and is fastened to the side wall 12.

Still refer to FIG. 8. The first rod portion 721 is provided with a first elongated rotary hole 7211 along a length direction of the first rod portion 721. The second rod portion 722 is provided with a second elongated rotary hole 7221 along a length direction of the second rod portion 722. The first sliding pillar 71 is located in the first elongated rotary hole 7211, and the second sliding pillar 25 is located in the second elongated rotary hole 7221.

For example, the first sliding pillar 71 is cylindrical. One end of the first sliding pillar 71 is located in the base 1, for example, is clamped on the inner wall of the base 1. The other end of the first sliding pillar 71 sequentially passes through the first elongated hole 121 and the first elongated rotary hole 7211, and is clamped on an outer surface that is of the first rod portion 721 and that is opposite to the base 1. The second sliding pillar 25 is also cylindrical. One end of the second sliding pillar 25 is fastened to the side portion of the sliding block 2. The other end of the second sliding pillar 25 sequentially passes through the second elongated hole 122 and the second elongated rotary hole 7221, and is clamped on an outer surface that is of the second rod portion 722 and that is opposite to the base 1.

Still refer to FIG. 8. In the solutions in which the transmission member 72 is the lever, the pivot position of the transmission member 72 is disposed, so that a short pressing stroke by the user leads to a long stroke of the connector 10 of the locking member. For example, the sliding block 2 slides 3 mm to 10 mm, but the first sliding pillar 71 can drive the connector 10 to move a 12±2 mm stroke.

Certainly, the pivot position of the transmission member 72 may be set, so that a small force can be used to unlock or lock the locking member.

As shown in FIG. 9, in a solution in which the transmission member 72 is a cable, the side wall 12 of the base 1 may be provided with a fixed pulley 124. The sliding direction of the second sliding pillar 25 is associated with the sliding direction of the first sliding pillar 71 by using the fixed pulley 124. As shown in FIG. 9, the fixed pulley 124 is located at an intersection point of the straight line on which the center line of the first elongated hole 121 is located along the elongated shape and the straight line on which the center line of the second elongated hole 122 is located along the elongated shape.

Still refer to FIG. 9. The transmission member 72 is a cable, one end of the transmission member 72 is fastened to the first sliding pillar 71, and the other end of the transmission member 72 is fastened to the second sliding pillar 25. Both the first sliding pillar 71 and the second sliding pillar 25 are used as a movable pulley.

Refer to FIG. 9. When the sliding block 2 slides under pressing, the second sliding pillar 25 pulls the first sliding pillar 71 to slide through the cable, so that the connector 10 moves. When the sliding block 2 is no longer pressed, the locking member is reset, the connector 10 pulls the second sliding pillar 25 to slide through the first sliding pillar 71, and the first elastic member 5 is reset and pushes the sliding block 2 to slide, so that the sliding block 2 is reset.

As shown in FIG. 10, in a solution in which the transmission member 72 is a connecting rod. One end of the transmission member 72 is a circular rotary hole, and the other end of the transmission member 72 is an elongated hole. For example, as shown in FIG. 10, a rotary hole that is of the transmission member 72 and that is rotatably connected to the second sliding pillar 25 is a circular rotary hole, and a rotary hole that is of the transmission member 72 and that is rotatably connected to the first sliding pillar 71 is an elongated rotary hole.

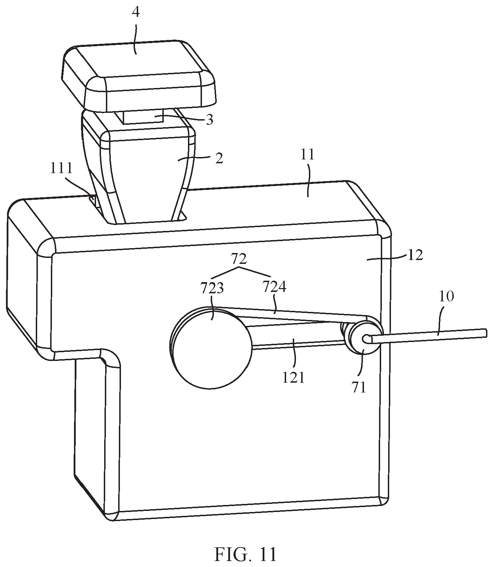

In an example, the transmission member 72 may be a structure other than the lever, cable, or connecting rod mentioned above. As shown in FIG. 11, the transmission member 72 may include a gear 723 and a cable 724. The gear 723 is rotatably connected to the base 1, and is engaged with the sliding block 2. The cable 724 is wound on the gear 723, and one end of the cable 724 is fastened to the first sliding pillar 71. In this way, the sliding block 2 during sliding drives the gear 723 to rotate, and the cable 724 is wound on the gear 723 gradually during rotation of the gear 723, to drive the first sliding pillar 71 to slide.

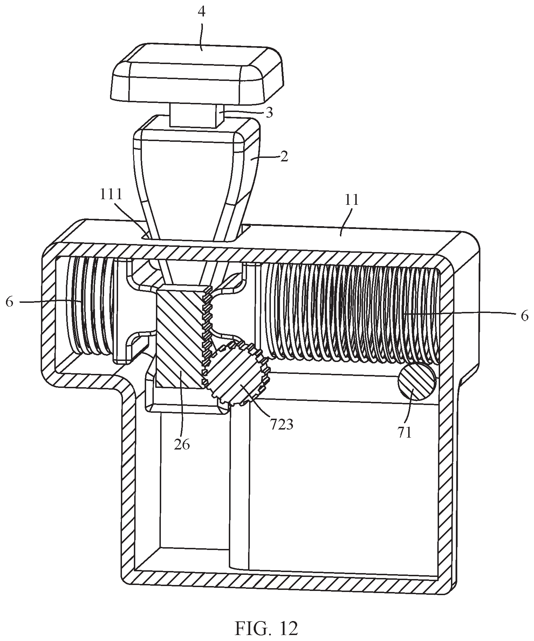

To enable the sliding block 2 to be engaged with the gear 723, correspondingly, as shown in FIG. 12, a side portion of the sliding block 2 is provided with a rack 26. The side portion provided with the rack 26 is a side portion that is not abutted by the second elastic member 6.

In another example, in a solution in which the transmission member 72 includes a gear, the foregoing cable 724 may alternatively be replaced with a gear. For example, refer to FIG. 17. The transmission member 72 includes a first gear 725 and a second gear 726, the sliding block 2 is provided with the foregoing rack 26, and the first sliding pillar 71 is also provided with a rack (the rack is denoted as a first rack 711). Teeth on the rack 26 of the sliding block 2 are arranged along the sliding direction of the sliding block 2, and teeth on the first rack 711 of the first sliding pillar 71 are arranged along the sliding direction of the first sliding pillar 71.

Still refer to FIG. 17. Both the first gear 725 and the second gear 726 are rotatably mounted on the base 1, the first gear 725 is engaged with the rack 26 of the sliding block 2, the second gear 726 is engaged with the first rack 711 of the first sliding pillar 71, and the first gear 725 is engaged with the second gear 726.

In this way, during sliding of the sliding block 2, because the rack 26 of the sliding block 2 is engaged with the first gear 725, the first gear 725 rotates to drive the second gear 726 to rotate, and the second gear 726 is engaged with the first rack 711 of the first sliding pillar 71, to drive the first sliding pillar 71 to slide.

It should be noted that, that the first gear 725 is engaged with the second gear 726 means that the first gear 725 and the second gear 726 may be directly engaged, or may be engaged by using at least one gear. For example, as shown in FIG. 17, the first gear 725 and the second gear 726 are engaged by using a third gear 727.

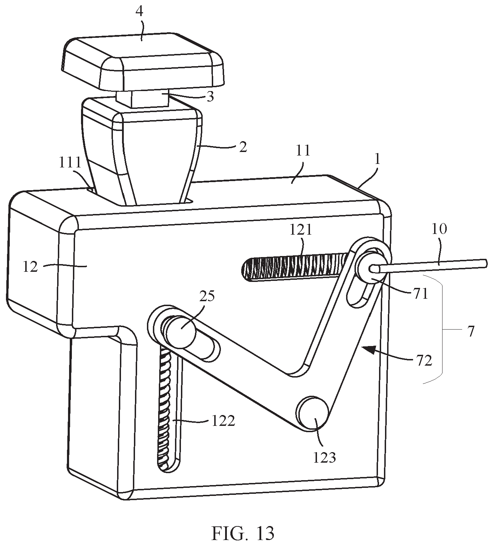

In the solutions shown in FIG. 17, transmission between the sliding block 2 and the first sliding pillar 71 is implemented by using a group of gears. Compared with the V-shaped lever transmission shown in FIG. 13, this transmission manner can reduce a dimension of the press switch in a height direction, facilitating arrangement of the press switch in a component with sufficient horizontal space but limited height space.

In addition, in the solutions shown in FIG. 17, the group of gears are used for transmission, and a transmission ratio between the gears can be controlled, for example, a radius of the first gear 725 is controlled to be greater than a radius of the second gear 726, so that a short moving stroke of the sliding block 2 drives the first sliding pillar 71 to move with a long stroke.

In addition, in the solutions shown in FIG. 17, the group of gears are used for transmission, and the gear with good rigidity, so that deformation does not occur during movement, and movement stability is good.

The following describes a structural feature of the base 1.

FIG. 2 shows a possible structural feature of the base 1. The base 1 is of a long boxshaped structure, including a top wall, a bottom wall, and four side walls. The assembly opening 111 of the top wall 11 is the groove opening of the first sliding groove 13. The base 1 may be used in a solution in which the first elastic member 5 is included but the second elastic member 6 is not included. A press switch includes the electronic switch of the base 1 shown in FIG. 2. If the sliding block 2 is connected to the locking member by using the transmission assembly 7, the transmission assembly 7 may be assembled on sheet metal of a vehicle door on which the press switch is located, or the transmission assembly 7 is assembled in a vehicle door by using a support. The second elongated hole that allows the second sliding pillar 25 to slide may be arranged on any side wall. The first elongated hole that allows the first sliding pillar 71 to slide may be arranged on the sheet metal of the vehicle door, or arranged on the support, or the like.

FIG. 5 is another possible structural feature of the base 1. The base 1 is a "7-shaped" or "inverted L-shaped" box structure, a vertical part of the base 1 forms the first sliding groove 13, a horizontal part of the base 1 forms the second sliding groove 14. The first sliding groove 13 communicates with the second sliding groove 14, the groove opening of the first sliding groove 13 faces the assembly opening 111 of the top wall 11, and the groove opening of the second sliding groove 14 faces the side portion of the sliding block 2. The first elastic member 5 is located in the first sliding groove 13, and the second elastic member 6 is located in the second sliding groove 14. In this solution, the transmission assembly 7 may be assembled on the base 1, or may be assembled on the vehicle door. For example, refer to FIG. 9 and FIG. 10. The transmission assembly 7 includes the first sliding pillar 71 and the transmission member 72. In the solutions in which the transmission member 72 is a cable or a connecting rod, the first elongated hole 121 that allows the first sliding pillar 71 to slide may be arranged on a groove wall of the second sliding groove 14.

FIG. 9 and FIG. 10 show other possible structural features of the base 1. The base 1 is a "T-shaped" box structure, and inner-box space of the base 1 forms a first sliding groove 13 and two second sliding grooves 14. A vertical part of the inner-box space forms the first sliding groove 13, two horizontal parts of the inner-box space form the two second sliding grooves 14, and the first sliding groove 13 communicates with the second sliding groove 14. A groove opening of the first sliding groove 13 faces the assembly opening 111 of the top wall 11, and groove openings of the two second sliding grooves 14 face side portions of the sliding block 2. A first elastic member 5 is located in the first sliding groove 13, one second elastic member 6 is located in one second sliding groove 14, and the other second elastic member 6 is located in the other second sliding groove 14. Groove depths of the two second sliding grooves 14 may be equal, or may not be equal. As shown in FIG. 9, the groove depths of the two second sliding grooves 14 are not equal.

In the solutions of the base shown in FIG. 9 and FIG. 10, the transmission assembly 7 may be assembled on the base 1, or may be assembled on the vehicle door. For example, refer to FIG. 9 and FIG. 10. The transmission assembly 7 includes the first sliding pillar 71 and the transmission member 72. In the solutions in which the transmission member 72 is a cable or a connecting rod, the first elongated hole 121 that allows the first sliding pillar 71 to slide may be arranged on a groove wall of one of the second sliding grooves 14.

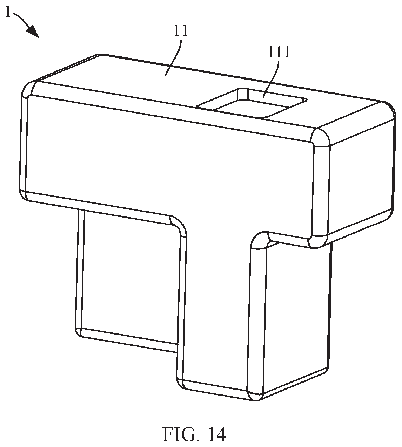

FIG. 13 and FIG. 14 show another possible structural feature of the base 1. The base 1 includes a T-shaped box and a side panel. For a structural feature of the T-shaped box, with reference to FIG. 9 and FIG. 10, two T-shaped side surfaces in opposite positions are included, and the side panel is located on one of the T-shaped side surfaces of the T-shaped box to form a side wall of the base 1. The base 1 shown in FIG. 13 may be used in a transmission assembly 7 shown in FIG. 13. A transmission member 72 included in the transmission assembly 7 is a V-shaped lever. The transmission assembly 7 is assembled on the side wall of the base 1, that is, on the side panel. For an assembly manner, refer to the foregoing description.

It can be learned from the foregoing that, the structure of the base 1 is as simple as possible and as small as possible in size, on the premise of meeting assembly of another component. In this case, the press switch is used on the vehicle door, and occupies small space in the vehicle door.

In this embodiment of the present disclosure, the press switch includes an electronic switch and a sliding block. The electronic switch is electrically connected to a controller that controls a locking member, and the sliding block is connected to the locking member, so that the press switch has both a mechanical switch function and an electronic switch function, thereby ensuring both intelligence and safety of the press switch. The electronic switch is located at one end of the sliding block, so that a touch-press position at which the press switch performs the electronic switch and a press position at which the press switch performs a mechanical switch are the same. This arrangement simplifies a component layout of the press switch, which helps reduce costs of the press switch. Moreover, an operation of the press switch is simplified, which helps improve safety in an emergency. This prevents a user from pressing a wrong position in an emergency in which the electronic switch function fails.

In addition, when the electronic switch is touched/pressed, a pressing force for pushing the electronic switch to perform the electronic switch function is less than or even far less than a pressing force for pushing the sliding block to slide to perform the mechanical switch function. Therefore, when the user touches/presses the press switch with a normal force, only the electronic switch is pressed, and the sliding block does not slide. Therefore, when the press switch performs the electronic switch function, the sliding block used to perform the mechanical switch function does not slide, thereby improving user experience.

An embodiment of the present disclosure further provides a vehicle door. The vehicle door includes a door body, a vehicle door lock, and the foregoing press switch. Both the vehicle door lock and the press switch are mounted on the door body, and the vehicle door lock is the foregoing locking member.

A button is assembled on an operation panel of the door body, and is in clearance fit with the operation panel, so that the button can be pressed. The button covers a touch-press part of an electronic switch, and the button is used to touch/press the electronic switch and/or press a sliding block to slide. The button may belong to the press switch. Alternatively, the button may not belong to the press switch, and is assembled on the operation panel of the vehicle door together with the press switch during assembly of the press switch.

In an example, the sliding block of the press switch may be directly connected to the vehicle door lock, or the sliding block may be indirectly connected to the vehicle door lock by using a transmission assembly.

For example, the sliding block of the press switch is directly connected to a connector 10 of the vehicle door lock. For another example, the sliding block is connected to the transmission assembly, and the transmission assembly is connected to a connector 10 of the vehicle door lock. For a solution in which the sliding block is connected to the vehicle door lock by using the transmission assembly, as described above, the transmission assembly is assembled on a base of the press switch. For details, refer to the foregoing description.

An embodiment of the present disclosure further provides a vehicle door. The vehicle door includes a door body, a vehicle door lock, a transmission assembly, and the foregoing press switch. The vehicle door lock, the transmission assembly, and the press switch are all assembled on the door body, a sliding block of the press switch is connected to the vehicle door lock by using the transmission assembly, and the vehicle door lock is a locking member.

A button is assembled on an operation panel of the door body, covers a touch-press part of an electronic switch, and is used to touch/press the electronic switch and/or press the sliding block to slide. The button may belong to the press switch. Alternatively, the button may not belong to the press switch, and is assembled on the operation panel of the vehicle door together with the press switch during assembly of the press switch.

In an example, the sliding block of the press switch is connected to a connector of the locking member by using the transmission assembly. The transmission assembly is assembled on the door body. For example, the transmission assembly may be directly assembled on the door body, or may be assembled on the door body by using a support. A first sliding pillar of the transmission assembly that is used to drive the connector to move may slide on the door body, or may slide on the support.

For example, a transmission member is a lever, and a pivot of the transmission member may be rotatably connected to the door body or the support. The first sliding pillar may slide on the door body (that is, a first elongated hole may be provided in the door body), or the first sliding pillar may slide on the support (that is, a first elongated hole may be provided in the support).

An embodiment of the present disclosure further provides a vehicle, and the vehicle includes the foregoing vehicle door.

## Claims

1. A press switch, comprising a base (1), a sliding block (2), and an electronic switch (3), wherein
a first end (21) of the sliding block (2) extends into the base (1), and the sliding block (2) can slide relative to the base (1);
the electronic switch (3) is located at a second end (22) of the sliding block (2), wherein positions of the first end (21) and the second end (22) of the sliding block (2) are opposite to each other; and
the sliding block (2) is configured to connect to a locking member, and the electronic switch (3) is configured to electrically connect to a controller that controls the locking member.

2. The press switch according to claim 1, wherein the base (1) is provided with an assembly opening (111) and a first sliding groove (13), and the assembly opening (111) communicates with the first sliding groove (13); and
the first end (21) of the sliding block (2) extends into the first sliding groove (13) through the assembly opening (111).

3. The press switch according to claim 2, wherein the press switch further comprises a first elastic member (5), the first elastic member (5) is located in the first sliding groove (13) and abuts against an end surface of the first end (21) of the sliding block (2), and an expansion/contraction direction of the first elastic member (5) is consistent with a sliding direction of the sliding block (2).

4. The press switch according to any one of claims 1 to 3, wherein the press switch further comprises a second elastic member (6), and the second elastic member (6) is provided between and abuts against the base (1) and at least one side portion of the sliding block (2).

5. The press switch according to claim 4, wherein a side surface that is of the side portion of the sliding block (2) and that abuts against the second elastic member (6) has an inclined surface, and the inclined surface is configured to gradually compress the second elastic member (6) in a process of pressing the sliding block (2).

6. The press switch according to claim 5, wherein the inclined surface comprises a first inclined surface (a) and a second inclined surface (b) that are connected, and a junction between the first inclined surface (a) and the second inclined surface (b) is a recess of the side surface on which the first inclined surface (a) and the second inclined surface (b) are located; and
when the sliding block (2) is not pressed, the second elastic member (6) abuts against the junction between the first inclined surface (a) and the second inclined surface (b).

7. The press switch according to claim 4, wherein a side surface that is of the base (1) and that abuts against the second elastic member (6) is provided with a second groove (131), and when the sliding block (2) is not pressed, an end part of the second elastic member (6) is engaged in the second groove (131).

8. The press switch according to claim 4 or 7, wherein the side surface that is of the base (1) and that abuts against the second elastic member (6) has an inclined surface, and the inclined surface is configured to make the second elastic member (6) gradually extend in a process of pressing the sliding block (2).

9. The press switch according to any one of claims 1 to 8, wherein the electronic switch (3) is a pressure switch, and a pressing force required to trigger the electronic switch (3) is less than a resistance applied to the sliding block (2) during sliding under pressing.

10. The press switch according to any one of claims 1 to 9, wherein a pressing direction of the electronic switch (3) is consistent with the sliding direction of the sliding block (2), and the electronic switch (3) is the pressure switch.

11. The press switch according to any one of claims 1 to 10, wherein the press switch further comprises a transmission assembly (7), the sliding block (2) is connected to the transmission assembly (7), and the transmission assembly (7) is configured to connect to the locking member.

12. The press switch according to claim 11, wherein a side wall (12) of the base (1) is provided with a first elongated hole (121), and an elongation direction of the first elongated hole (121) is consistent with a moving direction for driving the locking member to lock or unlock; and
the transmission assembly (7) comprises a first sliding pillar (71) and a transmission member (72), the first sliding pillar (71) is slidably located in the first elongated hole (121) and is configured to connect to the locking member, and the transmission member (72) is separately connected to the sliding block (2) and the first sliding pillar (71).

13. The press switch according to claim 12, wherein the side wall (12) of the base (1) is further provided with a second elongated hole (122), and an elongation direction of the second elongated hole (122) is consistent with the sliding direction of the sliding block (2); and
the sliding block (2) is provided with a second sliding pillar (25), and an end part of the second sliding pillar (25) extends out of the second elongated hole (122) and is connected to the transmission member (72).

14. The press switch according to claim 13, wherein the transmission member (72) is one of a lever, a cable, or a connecting rod.

15. The press switch according to claim 13 or 14, wherein a straight line on which the first elongated hole (121) is located intersects a straight line on which the second elongated hole (122) is located;
the transmission member (72) is a lever, and comprises a first rod portion (721) and a second rod portion (722) that intersect with each other, wherein an intersection of the first rod portion (721) and the second rod portion (722) is rotatably connected to the side wall (12) of the base (1);
the first rod portion (721) is provided with a first elongated rotary hole (7211) along a length direction of the first rod portion (721), and the second rod portion (722) is provided with a second elongated rotary hole (7221) along a length direction of the second rod portion (722); and
the first sliding pillar (71) is located in the first elongated rotary hole (7211), and the second sliding pillar (25) is located in the second elongated rotary hole (7221).

16. The press switch according to claim 12, wherein the transmission member (72) comprises a gear (723) and a cable (724), and the sliding block (2) is provided with a rack (26); and
the gear (723) is rotatably mounted on the base (1), and is engaged with the rack (26), the cable (724) is wound around the gear (723), and one end of the cable (724) is fastened to the first sliding pillar (71).

17. The press switch according to claim 12, wherein the transmission member (72) comprises a first gear (725) and a second gear (726), the sliding block (2) is provided with a rack (26), and the first sliding pillar (71) is provided with a first rack (711); and
both the first gear (725) and the second gear (726) are rotatably mounted on the base (1), the first gear (725) is engaged with the rack (26) of the sliding block (2), the second gear (726) is engaged with the first rack (711) of the first sliding pillar (71), and the first gear (725) is engaged with the second gear (726).

18. The press switch according to any one of claims 1 to 17, wherein the press switch further comprises a button (4), one part of the button (4) covers a touch-press part (31) of the electronic switch (3), another part of the button (4) covers the sliding block (2), and a minimum spacing between the part that is of the button (4) and that covers the sliding block (2) and the sliding block (2) is less than or equal to a maximum pressing stroke of the touch-press part (31) of the electronic switch (3).

19. A vehicle door, wherein the vehicle door comprises a door body, a vehicle door lock, and the press switch according to any one of claims 1 to 18, the vehicle door lock and the press switch are both assembled on the door body, and the vehicle door lock is the locking member; and
a button (4) is assembled on an operation panel of the door body, the button (4) covers the touch-press part (31) of the electronic switch (3), and the button (4) is used to touch/press the electronic switch (3) and/or press the sliding block (2) to slide.

20. A vehicle door, wherein the vehicle door comprises a door body, a vehicle door lock, a transmission assembly (7), and the press switch according to any one of claims 1 to 10, the vehicle door lock, the transmission assembly (7), and the press switch are all assembled on the door body, the sliding block (2) of the press switch is connected to the vehicle door lock by using the transmission assembly (7), and the vehicle door lock is the locking member; and
a button (4) is assembled on an operation panel of the door body, the button (4) covers the touch-press part (31) of the electronic switch (3), and the button (4) is used to touch/press the electronic switch (3) and/or press the sliding block (2) to slide.

21. A vehicle, wherein the vehicle comprises the vehicle door according to claim 19 or 20.
